# EUROPEAN PATENT APPLICATION

(11) **EP 2 797 081 A1**
(43) Date of publication of application: **29.10.2014**
(21) Application number: 12860355.2
(22) Date of filing: 20.12.2012
(51) Int. Cl.: G21F 9/06, B01D 21/01, B03C 1/00, G21F 9/10, G21F 9/12

(54) **METHOD FOR REMOVING CESIUM IONS IN AQUEOUS SOLUTION EMPLOYING MAGNETIC PARTICLES**

(30) Priority: 21.12.2011 JP 2011279889
(71) Applicant: JNC Corporation, Chiyoda-ku Tokyo 100-8105 (JP)
(72) Inventor: XIE, Xiaomao, Ichihara-shi, Chiba 290-8551 (JP); HATA, Hideyuki, Ichihara-shi, Chiba 290-8551 (JP); OHNISHI, Noriyuki, Ichihara-shi, Chiba 290-8551 (JP)
(74) Representative: Thurston, Joanna
(86) International application number: PCT/JP2012/083158
(87) International publication number: WO 2013/094711

(57) **Abstract**

An object of the present invention is to provide a method for removing cesium ions, where cesium ions in an aqueous solution can be efficiently separated and recovered in a short time, the number of human-performed steps can be decreased as much as possible, and the amount of cesium-containing waste can be reduced. The method for removing cesium ions of the present invention can remove cesium ions in an aqueous solution, comprising adsorbing cesium ions by a water-soluble adsorbent in a cesium-containing aqueous solution, transforming said water-soluble adsorbent having adsorbed thereto cesium ions into a water-insoluble magnetic composite in the presence of a magnetic particle, and magnetically separating said magnetic composite.

## Description

### Technical Field

The present invention relates to a method for removing cesium ions in an aqueous solution. More specifically, the present invention relates to a method for removing radioactive cesium ions from water contaminated with a large amount of radioactive cesium generated in a nuclear accident or the like.

### Background Art

As the method for removing cesium ions from water contaminated with radioactive cesium such as ¹³⁷Cs and ¹³⁴Cs, there is a method of adsorbing cesium ions onto a support that is, for example, zeolites such as mordenite, heteropolyacid salts such as ammonium phosphomolybdate, acidic salts of a polyvalent metal, such as titanium phosphate, or an inorganic ion exchanger such as water-insoluble ferrocyanides (Patent Documents 1 and 2 and Non-Patent Document 1).

However, these supports exhibit a low selectivity for cesium ion and when a metal ion, particularly, sodium ion, is present together in an aqueous solution like seawater, the adsorption performance for cesium ion is extremely decreased, as a result, a large amount of a support is required and in turn, a large amount of radioactive waste produced by the adsorption must be treated. Also, since a support insoluble in water is used, the cesium ion adsorption reaction is inhomogeneous, and it takes time to reach an adsorption equilibrium.

Also, there is a method of directly charging water-insoluble ferrocyanides into water contaminated with radioactive cesium to adsorb cesium ions, further adding a polymer coagulant to form a precipitate, and subjecting the precipitate to steps of centrifugation, filtration under reduced pressure and drying, thereby removing the radioactive cesium in a short time (Non-Patent Document 2).

In the method of directly charging water-insoluble ferrocyanides, the treatment may be performed in a short time as compared with the conventional method using a support but still takes time. In addition, automation of the process involving filtration under reduced pressure is difficult and therefore, many human-performed steps are necessary to treat the precipitate containing radioactive cesium concentrated to a high concentration, giving rise to a serious problem that the opportunity of being exposed to radiation during the treating work increases.

Furthermore, in recent years, a wastewater treating system using a magnetic particle has been developed, and magnetic column separation is utilized for the removal of heavy metals in an aqueous solution. Accordingly, when this method is utilized for the separation of cesium ions in an aqueous solution, cesium ions can be removed by magnetic column separation without steps of centrifugation and filtration under reduced pressure and therefore, the method is supposed to be suitable for rapid removal of cesium ions with lessened exposure of human to radiation. However, this method also uses a water-insoluble magnetic particle, that is, requires time until reaching an adsorption equilibrium, and furthermore has a problem of column clogging, and therefore, automatic treatment is difficult in practice (Non-Patent Documents 3 and 4).

### Citation List

### Patent Document

Patent Document 1: JP-A-7-308590 (the term "JP-A" as used herein means an "unexamined published Japanese patent application")
Patent Document 2: JP-A-11-76807

### Non-patent Document

Non-patent Document 1 : Journal of Environmental Radioactivity 100 (2009) 914-920
Non-patent Document 2 : Journal of Radioanalytical and Nuclear Chemistry, Vol.258, No.3 (2003) 457-462
Non-patent Document 3 : Journal of Magnetism and Magnetic Materials 267 (2003) 335-340
Non-patent Document 4 : Journal of Radioanalytical and Nuclear Chemistry, Vol.270, No.3 (2006) 585-592

### Summary of Invention

### Technical Problem

Accordingly, an object of the present invention is to provide a method for removing cesium ions, where cesium ions in an aqueous solution can be efficiently separated and recovered in a short time, the number of human-performed steps can be decreased as much as possible, and the amount of cesium-containing waste can be reduced.

### Solution to Problem

The present inventors have diligently continued to conduct study so as to solve the problem. As a result, the present inventors have found a method for homogeneously removing cesium ions in an aqueous solution in a short time. That is, the present invention has been accomplished by the following configurations.
[1] A method for removing cesium ions in an aqueous solution, comprising adsorbing cesium ions by a water-soluble adsorbent in a cesium-containing aqueous solution, transforming the water-soluble adsorbent having adsorbed thereto cesium ions into a water-insoluble magnetic composite in the presence of a magnetic particle, and magnetically separating the magnetic composite.
   [2] The method for removing cesium ions in an aqueous solution as described in the above [1], wherein the magnetic composite is produced in the presence of a co-precipitant and magnetically separated.
   [3] The method for removing cesium ions in an aqueous solution as described in the above [2], wherein the co-precipitant is a divalent metal ion or a trivalent metal ion.
   [4] The method for removing cesium ions in an aqueous solution as described in any one of the above [1] to [3], wherein the magnetic particle is a stimulus-responsive magnetic particle capable of undergoing aggregation upon application of stimulation.
   [5] The method for removing cesium ions in an aqueous solution as described in the above [4], wherein the stimulation is at least one change selected from the group consisting of a temperature change, a pH change and a salt concentration change.
   [6] The method for removing cesium ions in an aqueous solution as described in any one of the above [1] to [5], wherein the water-soluble adsorbent is a water-soluble ferrocyanide.
   [7] The method for removing cesium ions in an aqueous solution as described in the above [6], wherein the water-soluble ferrocyanide is potassium ferrocyanide or sodium ferrocyanide.
   [8] The method for removing cesium ions in an aqueous solution as described in any one of the above [1] to [7], wherein the magnetic particle is a magnetic particle having an average particle diameter of 1 to 1,000 nm.
   [9] The method for removing cesium ions in an aqueous solution as described in any one of the above [1] to [8], wherein the magnetic particle is added after adding the water-soluble adsorbent to the cesium-containing aqueous solution to adsorb cesium ions.
   [10] The method for removing cesium ions in an aqueous solution as described in any one of the above [1] to [8], wherein the water-soluble adsorbent and the magnetic particle are added simultaneously to the cesium-containing aqueous solution.

In the present invention, cesium ions in an aqueous solution are not adsorbed/separated by adding a water-insoluble substance having a cesium ion adsorption capacity (for example, a support such as zeolite, a water-insoluble ferrocyanide, or a magnetic particle which is difficult to disperse and contains such a material) to a cesium-containing aqueous solution, but a water-soluble compound having a cesium ion adsorption capacity and a magnetic particle are added to the cesium-containing aqueous solution, whereby cesium ions can be homogeneously, rapidly and efficiently separated and recovered.

### Advantageous Effects of Invention

According to the present invention, cesium ions in an aqueous solution can be simply removed in a short time with excellent cesium removal efficiency.

Furthermore, according to the present invention, the steps such as centrifugation and filtration under reduced pressure, which have been conventionally required, can be simplified by a magnetic separation step, so that the cesium removal process can be automated. As a result, in the case of removing radioactive cesium ions, exposure of human to radiation can be minimized, and this is very valuable as a technique for treating radioactive cesium. Also, the volume of the cesium ion-containing magnetic composite recovered is very small compared with the waste recovered in the method of adsorbing cesium ions by a water-insoluble adsorption support such as zeolite, and the amount of radioactive waste can be greatly reduced.

### Description of Embodiments

The method for removing cesium ions in an aqueous solution according to the present invention includes adsorbing cesium ions by a water-soluble adsorbent in a cesium-containing aqueous solution, transforming the water-soluble adsorbent having adsorbed thereto cesium ions into a water-insoluble magnetic composite in the presence of a magnetic particle, and magnetically separating the magnetic composite.

As the water-soluble adsorbent having a cesium ion adsorption capacity, for example, a water-soluble ferrocyanide is preferably used. The water-soluble ferricyanide is preferably a salt containing an alkali metal or a nitrogen compound, and examples thereof include a sodium salt, a potassium salt and an ammonium salt. Among these, potassium ferrocyanide and sodium ferrocyanide are preferred.

In the present invention, the magnetic particle is used as a solid phase. The magnetic particle can be produced, for example, by the method disclosed in JP-T-2002-517085 (the term "JP-T" as used herein means a published Japanese translation of a PCT patent application). More specifically, this is a method where an aqueous solution containing an iron(II) compound or containing an iron(II) compound and a metal(II) compound is put in an oxidizing condition necessary to form a magnetic oxide and a magnetic iron oxide or ferrite particle is formed by maintaining the pH of the solution at 7 or more. The magnetic particle can also be produced by mixing a metal(II) compound-containing aqueous solution and an iron(III) compound-containing aqueous solution under alkaline conditions.

Alternatively, the magnetic particle can also be produced from a polyhydric alcohol and magnetite. The polyhydric alcohol can be used without any particular limitation as long as it is an alcohol structure having at least two hydroxyl groups in the constitutional unit and being bindable to an iron ion. Examples thereof include dextran, polyvinyl alcohol, mannitol, sorbitol, and cyclodextrin. For example, a method for producing a magnetic particle by using dextran is disclosed in JP-A-2005-082538, and the magnetic particle can be produced by this method. In addition, a compound having an epoxy group and being capable of forming a polyhydric alcohol structure after ring opening, such as glycidyl methacrylate polymer, may also be used.

The magnetic particle preferably has an average particle diameter of nano-size of 1 to 1,000 nm so as to exhibit good dispersibility. In particular, for increasing the reaction rate of the cesium ion with the water-soluble adsorbent having a cesium ion adsorption capacity in the aqueous solution, the average particle diameter is preferably from 50 to 200 nm. The particle diameter can be measured by light scattering, and the device enabling such particle diameter measurement includes ELS-8000 (manufactured by Otsuka Electronics Co., Ltd.).

In the present invention, a water-soluble adsorbent having a cesium ion adsorption capacity and a magnetic particle are added to a cesium-containing aqueous solution, whereby cesium ions are adsorbed to the water-soluble adsorbent, and the water-soluble adsorbent having adsorbed thereto cesium ions and the magnetic particle form a composite to produce a magnetic composite. This magnetic composite is water-insoluble and therefore, can be separated from the aqueous solution by magnetism of a magnet or the like. Separating the magnetic composite or magnetic particle from the aqueous solution by magnetism of a magnet or the like is referred to as magnetic separation.

In the present invention, the water-soluble adsorbent having a cesium ion adsorption capacity and the magnetic particle may be only added to the cesium-containing aqueous solution and reacted to produce a water-insoluble magnetic composite but are preferably reacted in the presence of a co-precipitant. Furthermore, by adding a co-precipitant, production of a magnetic composite can be promoted to expedite magnetic separation.

As the co-precipitant, for example, a divalent or trivalent metal ion can be used, and use of a divalent metal ion is preferred. Also, such an ion is preferably used in the form of an aqueous solution.

The divalent metal ion includes, for example, Ni²⁺, Cu²⁺, Co²⁺, Fe²⁺, Mg²⁺, Ca²⁺, Zn²⁺, Pb²⁺, Pd²⁺, Pt²⁺, Cd²⁺, Mn²⁺, and Cr²⁺. This divalent metal ion is used in the form of a counter ion in an inorganic acid salt such as sulfate, nitrate, carbonate, phosphate and chloride. Among these, a sulfate of Ni²⁺ (nickel sulfate) is preferred. As the aqueous divalent metal ion solution, an aqueous solution containing such a divalent metal ion can be utilized. The concentration of the divalent metal ion is preferably from 0.0001 to 0.5 M, more preferably from 0.001 to 0.01 M.

The trivalent metal ion includes Cr³⁺, Fe³⁺, Co³⁺, Al³⁺ and the like. This trivalent metal ion is used in the form of a counter ion in an inorganic acid salt such as sulfate, nitrate, carbonate and chloride. Among these, a chloride of Fe³⁺ (iron chloride) is preferred. As the aqueous trivalent metal ion solution, an aqueous solution containing such a trivalent metal ion can be utilized. The concentration of the trivalent metal ion is preferably from 0.0001 to 0.5 M, more preferably from 0.001 to 0.01 M.

In the present invention, the water-soluble adsorbent having a cesium ion adsorption capacity, the magnetic particle and the co-precipitant may be added simultaneously or separately to the cesium-containing aqueous solution. The order of addition is not particularly limited, but the water-soluble adsorbent having a cesium ion adsorption capacity, the magnetic particle and the co-precipitant are preferably added in this order.

If the magnetic particle has an average particle diameter of 1,000 nm or less, the magnetic separation may take time. Therefore, it is preferred for increasing the magnetic separation rate to use a magnetic particle that is surface-modified with a stimulus-responsive polymer (stimulus-responsive magnetic particle). The stimulation includes a temperature change, a pH change, a salt concentration change and the like.

For example, in the case of a temperature-responsive polymer-surface-modified magnetic particle, the temperature-responsive polymer aggregates due to heating or cooling, and the magnetic particles produce an aggregate mass, so that magnetic separation in a short time can be achieved (JP-A-2005-082538). The temperature-responsive polymer-surface-treated magnetic particle includes "Therma-Max (registered trademark)" of JNC Corporation, and the like. The temperature response range of the temperature-responsive polymer-surface-modified magnetic particle is not particularly limited, but, for example, in the case where the magnetic particle used has a lower limit critical solution temperature, a particle having a temperature response range of 25 to 40°C, more preferably from 30 to 37°C, is preferably used. In addition, the aggregate mass can be produced not only by a temperature change but also by using an aggregating agent. As the aggregating agent, for example, a metal salt such as lithium sulfate, potassium sulfate and sodium sulfate, a metal carboxylate such as sodium acetate and sodium citrate, and a metal chloride such as sodium chloride, may be used. Particularly, in the case of using seawater, an aggregate mass can be produced without using a specific aggregating agent. The aggregate mass produced by using an aggregating agent enables magnetic separation in a short time, similarly to the aggregate mass produced by heating or cooling.

The cesium ion concentration of the cesium-containing aqueous solution to which the method of the present invention can be applied is not particularly limited, but the method can be widely applied to a cesium-containing aqueous solution having a cesium ion concentration of 1,000 ppm to 1 ppm. Incidentally, the cesium ion concentration (ppm) as used in the present invention indicates a weight concentration ((weight of cesium ion)/(volume of aqueous solution)).

According to the method of the present invention, for example, when "Therma-Max (registered trademark)" of JNC Corporation is used as the temperature-responsive polymer-surface-modified magnetic particle, cesium ions can be separated/removed in about 5 minutes in the adsorption step or in approximately from 10 to 30 minutes even including the magnetic separation step.

Also, the cesium ion removal ratio is from 90 to 99.9%, and thus, a cesium ion treatment efficiency higher than the conventional treatment efficiency can be achieved. In addition, the volume of the precipitate recovered, which may vary depending on the cesium ion concentration, is approximately somewhat over the amounts used of the water-soluble adsorbent and the co-precipitant employed, if desired, so that the volume of waste can be by far smaller than the volume of the precipitate obtained in the conventional removal method.

### Examples

The present invention is described in greater detail below by referring to Examples, but the present invention is not limited to these Examples.

Incidentally, the measurement of cesium ion concentration by atomic absorption photometry was performed at a measurement wavelength of 852.1 nm by using a flame atomic absorption photometer, "Z-2300", manufactured by Hitachi High-Technologies Corporation.

Also, water used in the present invention is purified water having an electrical conductivity of 14.7 MΩcm, which was purified by a pure water production apparatus, "Elix UV 35", manufactured by Millipore Corporation.

Here, the room temperature as used in the present invention indicates 25°C.

Furthermore, the cesium ion removal ratio was determined by (cesium ion concentration before reaction - cesium ion concentration of supernatant after recovery of magnetic particle)/(cesium ion concentration before reaction)×100.

### (Example 1)

A 110-ml screw tube bottle was charged with 80 ml of a cesium chloride-containing aqueous solution of 10 vol% seawater (cesium chloride concentration: 0.253 mg/ml) obtained by dissolving cesium chloride in seawater and water, and subsequently, an aqueous solution of potassium ferrocyanide trihydrate (concentration: 100 mg/ml) and purified water each in an amount of 1 ml were added. After the reaction at room temperature for 5 minutes on a seesaw shaker (Model No. BC-700) manufactured by Bio Craft Co., Ltd., 1 ml of a thermoresponsive magnetic particle (Therma-Max, 40 mg/ml, average particle diameter: 100 nm) dispersed in 10 × phosphate buffer was added, and the reaction was further allowed to proceed for 25 minutes on a seesaw shaker (Model No. BC-700) manufactured by Bio Craft Co., Ltd. Thereafter, the magnetic particle was recovered by a neodymium magnet of 4000 G.

The supernatant after the recovery of magnetic particle was collected, and the cesium ion concentrations before and after the reaction were measured by atomic absorption photometry. As a result, the cesium ion concentration was reduced to 2 ppm (cesium ion concentration of supernatant after recovery of magnetic particle) from 240 ppm (cesium ion concentration before reaction). From this result, it was found that 99% or more of cesium ions could be removed by the magnetic particle.

### (Example 2)

The cesium ion concentrations before and after reaction were measured in the same way as in Example 1 except that 1 ml of aqueous solution of nickel sulfate hexahydrate (concentration: 262.85 mg/ml) was added in place of purified water which added in Example 1 after adding 1 ml of aqueous solution of potassium ferrocyanide trihydrate. As a result, the cesium ion concentration was reduced to 4 ppm (cesium ion concentration of supernatant after recovery of magnetic particle) from 240 ppm (cesium ion concentration before reaction). From this result, it was found that 98% or more of cesium ions could be removed by the magnetic particle.

### (Example 3)

A 110-ml screw tube bottle was charged with 80 ml of a cesium chloride-containing aqueous solution of 10 vol% seawater (cesium chloride concentration: 0.253 mg/ml) obtained by dissolving cesium chloride in seawater different from that used in Example 1 and water, and subsequently, 0.5 ml of aqueous solution of potassium ferrocyanide trihydrate (concentration: 100 mg/ml) and 0.1 ml of aqueous solution of nickel sulfate hexahydrate (concentration: 262.85 mg/ml) were added. After the reaction at room temperature for 5 minutes on a seesaw shaker (Model No. BC-700) manufactured by Bio Craft Co., Ltd., 1 ml of a thermoresponsive magnetic particle (Therma-Max, 40 mg/ml, average particle diameter: 100 nm) dispersed in 10 × phosphate buffer was added, and the reaction was further allowed to proceed for 30 minutes on a seesaw shaker (Model No. BC-700) manufactured by Bio Craft Co., Ltd. Thereafter, the magnetic particle was recovered by a neodymium magnet of 4000 G.

The supernatant after the recovery of magnetic particle was collected, and the cesium ion concentrations before and after the reaction were measured by atomic absorption photometry. As a result, the cesium ion concentration was reduced to less than 1 ppm (cesium ion concentration of supernatant after recovery of magnetic particle) from 220 ppm (cesium ion concentration before reaction). From this result, it was found that 99% or more of cesium ions could be removed by the magnetic particle.

### (Example 4)

In Example 3, a magnetic particle with no stimulus responsiveness (Dextran Magnetite (DM), 40 mg/ml, average particle diameter: 70 nm) produced by the following method was used in place of the thermoresponsive magnetic particle to perform cesium removal. The production of DM is as follows. A 100 ml-volume flask was charged with 3 ml of a mixed aqueous solution of ferric chloride hexahydrate (1.0 mol) and ferrous chloride tetrahydrate (0.5 mol) and 60 ml of aqueous solution of 10 wt% dextran (produced by Wako Pure Chemicals Industries, Ltd., molecular weight: from 32,000 to 40,000) that is a polyhydric alcohol, and the resulting mixed solution was stirred with a mechanical stirrer and heated to 50°C. Subsequently, 5.0 ml of 25 wt% ammonia solution was added dropwise thereto, and the reaction solution was stirred for about 1 hour. By this operation, a dextran-containing magnetic particle having an average particle diameter of about 70 nm was obtained. The reaction was performed for 16 hours in the same way as in Example 3 except for using DM produced above, and the cesium ion concentrations before and after the reaction were measured. As a result, the cesium ion concentration was reduced to 9 ppm (cesium ion concentration of supernatant after recovery of magnetic particle) from 220 ppm (cesium ion concentration before reaction). From this result, it was found that 95% or more of cesium ions could be removed by the magnetic particle.

### (Example 5)

The reaction was performed for 16 hours in the same way as in Example 3 except that in Example 3, a kind of micro-size magnetic particle with no stimulus responsiveness (Dynabeads M-270 Amine (trade name) produced by Ivitrogen Dynal AS, 30 mg/ml, average particle diameter: 2.8 µm) was used in place of the thermoresponsive magnetic particle, and the cesium ion concentrations before and after the reaction were measured. As a result, the cesium ion concentration was reduced to 12 ppm (cesium ion concentration of supernatant after recovery of magnetic particle) from 220 ppm (cesium ion concentration before reaction). From this result, it was found that 94% or more of cesium ions could be removed by the micro-size magnetic particle with no stimulus responsiveness.

### (Example 6)

The reaction was performed for 25 minutes in the same way as in Example 3 except that in Example 3, 1 ml of purified water was added in place of the aqueous solution of nickel sulfate hexahydrate, and the cesium ion concentrations before and after the reaction were measured. As a result, the cesium ion concentration was reduced to 2 ppm (cesium ion concentration of supernatant after recovery of magnetic particle) from 220 ppm (cesium ion concentration before reaction). From this result, it was found that 99% or more of cesium ions could be removed by the thermoresponsive magnetic particle.

### (Comparative Example 1)

A 50-ml sample tube was charged with 390 mg of pulverized natural hard zeolite ("NS-IZK-ZEOLITE" produced by NEW STONE), and furthermore, 39 ml of cesium-containing aqueous solution of 10 vol% seawater prepared by adding 10 ml of aqueous solution of cesium chloride (concentration: 20 mg/ml) to 78 ml of seawater and 692 ml of water was charged into the sample tube. The mixed solution was stirred by a rotary shaker for 5 minutes, 30 minutes, 1 hour, 4 hours and 24 hours, and thereafter, zeolite was separated by centrifugation (10,000 rpm, 2 minutes).

After that, the supernatant was collected, and the cesium ion concentrations before and after the reaction were measured by atomic absorption photometry to determine the cesium ion removal ratio. As a result, 70%, 84%, 88%, 89% and 95% of cesium ions was removed after 5 minutes, 30 minutes, 1 hour, 4 hours and 24 hours, respectively, but it was confirmed that even when the adsorption operation is continued for 24 hours, 5% of cesium remains.

### (Reference Example 1)

In Example 3, a kind of magnetic particle with no stimulus responsiveness (Dextran Magnetite (DM), 40 mg/ml, average particle diameter: 70 nm) produced by the following method was used in place of the thermoresponsive magnetic particle to perform cesium removal. The production of DM is as follows. A 100 ml-volume flask was charged with 3 ml of a mixed aqueous solution of ferric chloride hexahydrate (1.0 mol) and ferrous chloride tetrahydrate (0.5 mol) and 60 ml of aqueous solution of 10 wt% dextran (produced by Wako Pure Chemicals Industries, Ltd., molecular weight: from 32,000 to 40,000) that is a polyhydric alcohol, and the resulting mixed solution was stirred with a mechanical stirrer and heated to 50°C. Subsequently, 5.0 ml of 25 wt% ammonia solution was added dropwise thereto, and the reaction solution was stirred for about 1 hour. By this operation, a dextran-containing magnetic particle having an average particle diameter of about 70 nm was obtained. In this Reference Example, the reaction was performed for 16 hours in the same way as in Example 3 except for using DM and adding 1 ml of purified water in place of the aqueous solution of nickel sulfate hexahydrate, and the cesium ion concentrations before and after the reaction were measured.

As a result, the cesium ion concentration was reduced to 200 ppm (cesium ion concentration of supernatant after recovery of magnetic particle) from 220 ppm (cesium ion concentration before reaction). From this result, it was found that only about 8% of cesium ions could be removed by the magnetic particle. This result suggests that a magnetic composite having adsorbed thereto cesium ions was scarcely formed in the aqueous solution.

### (Reference Example 2)

The reaction was performed for 16 hours in the same way as in Example 3 except that in Example 3, a kind of micro-size magnetic particle with no stimulus responsiveness (Dynabeads M-270 Amine (trade name) produced by Ivitrogen Dynal AS, 30 mg/ml, average particle diameter: 2.8 µm) was used in place of the thermoresponsive magnetic particle and 1 ml of purified water was added in place of the aqueous solution of nickel sulfate hexahydrate, and the cesium ion concentrations before and after the reaction were measured.

As a result, the cesium ion concentration was reduced to 104 ppm (cesium ion concentration of supernatant after recovery of magnetic particle) from 220 ppm (cesium ion concentration before reaction). From this result, it was found that only about 53% of cesium ions could be removed by the magnetic particle. This result suggests that a magnetic composite having adsorbed thereto cesium ions was scarcely formed in the aqueous solution.

The method and apparatus of the present invention can effectively remove/recover cesium ions in an aqueous solution and are suitable particularly as a technique for removing cesium ions from water contaminated with radioactive cesium such as ¹³⁷Cs and ¹³⁴Cs.

While the invention has been described in detail and with reference to specific embodiments thereof, it will be apparent to one skill in the art that various changes and modifications can be made therein without departing from the sprit and scope thereof. This application is based on Japanese patent application No. 2011-279889 filed on December 21, 2014, the entire contents of which are incorporated hereinto by reference. All references cited herein are incorporated in their entirety.

## Claims

1. A method for removing cesium ions in an aqueous solution, comprising adsorbing cesium ions by a water-soluble adsorbent in a cesium-containing aqueous solution, transforming said water-soluble adsorbent having adsorbed thereto cesium ions into a water-insoluble magnetic composite in the presence of a magnetic particle, and magnetically separating said magnetic composite.

2. The method for removing cesium ions in an aqueous solution as claimed in claim 1, wherein said magnetic composite is produced in the presence of a co-precipitant and magnetically separated.

3. The method for removing cesium ions in an aqueous solution as claimed in claim 2, wherein said co-precipitant is a divalent metal ion or a trivalent metal ion.

4. The method for removing cesium ions in an aqueous solution as claimed in any one of claims 1 to 3, wherein said magnetic particle is a stimulus-responsive magnetic particle capable of undergoing aggregation upon application of stimulation.

5. The method for removing cesium ions in an aqueous solution as claimed in claim 4, wherein said stimulation is at least one change selected from the group consisting of a temperature change, a pH change and a salt concentration change.

6. The method for removing cesium ions in an aqueous solution as claimed in any one of claims 1 to 5, wherein said water-soluble adsorbent is a water-soluble ferrocyanide.

7. The method for removing cesium ions in an aqueous solution as claimed in claim 6, wherein said water-soluble ferrocyanide is potassium ferrocyanide or sodium ferrocyanide.

8. The method for removing cesium ions in an aqueous solution as claimed in any one of claims 1 to 7, wherein said magnetic particle is a magnetic particle having an average particle diameter of 1 to 1,000 nm.

9. The method for removing cesium ions in an aqueous solution as claimed in any one of claims 1 to 8, wherein said magnetic particle is added after adding said water-soluble adsorbent to said cesium-containing aqueous solution to adsorb cesium ions.

10. The method for removing cesium ions in an aqueous solution as claimed in any one of claims 1 to 8, wherein said water-soluble adsorbent and said magnetic particle are added simultaneously to said cesium-containing aqueous solution.
